(19) Europäisches Patentamt
European Patent Office
Office européen des brevets

(11) EP 1 944 898 A2

(12) EUROPEAN PATENT APPLICATION

(43) Date of publication:
16.07.2008 Bulletin 2008/29

(51) Int Cl.:
*H04L 1/00* (2006.01)

(21) Application number: 08100083.8

(22) Date of filing: 03.01.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 12.01.2007 JP 2007004858

(71) Applicant: Fujitsu Ltd.
Kawasaki-shi, Kanagawa 211-8588 (JP)

(72) Inventors:
• Kameyama, Hiroaki
FUJITSU LIMITED
Kawasaki-shi, Kanagawa 211-8588 (JP)
• Sato, Yuichi
FUJITSU LIMITED
Kawasaki-shi, Kanagawa 211-8588 (JP)
• Sazawa, Shinichi
FUJITSU LIMITED
Kawasaki-shi, Kanagawa 211-8588 (JP)

(74) Representative: Wilding, Frances Ward
Haseltine Lake
Lincoln House
300 High Holborn
London WC1V 7JH (GB)

(54) **System for distributing data by dividing the same into plural pieces of partial data**

(57) Disclosed is a system for dividing an original data into N pieces of partial data and generating L pieces of encoded data on the basis of the N pieces of partial data wherein N is a natural number greater than 1 and L is a natural number equal to or greater than N, each of the L pieces of encoded data including a header part and a operation result part, the header part including selection data identifying a subset of the N pieces of partial data on which a predetermined operation is performed, the operation result part being generated by performing the predetermined operation on partial data included in the subset identified by the selection data, wherein the L pieces of encoded data are divided into one or more transmission data groups and each of the one or more transmission data groups is transmitted to one of one or more first communication links.

FIG. 3

EP 1 944 898 A2

**EP 1 944 898 A2**

**Description**

BACKGROUND OF THE INVENTION

1. Field of the Invention

The present invention relates to a system for distributing data by dividing it into plural pieces of partial data.

2. Description of the Related Art

During data transfer from a transmission device to a reception device, a part of the data can be lost due to change in reception conditions, communication congestion, or the like. In such a case, the original data can be restored by retransmitting the lost data if it is possible to send some message from the reception device to the transmission device. However, for example, in a case of multicast, if it is not possible to send a message from a reception device to a transmission device, it is difficult to retransmit only lost data. In view of the above, several data transfer methods have been proposed.

For example, Japanese Unexamined Patent Application Publication No. 5-235979 has disclosed an asynchronous transfer mode communication method for increasing tolerance to subsequent lost data. Moreover, Japanese Unexamined Patent Application Publication No. 2005-223683 has disclosed a transmission/reception system for generating parity data using logic operation of exclusive OR (XOR).

Further, several data transfer methods have been proposed for the configuration in which it is not possible to send a message from a reception device to a transmission device.

For example, a data transfer method referred to as data carousel has been provided. The data transfer method is for use in digital broadcasting. In the method, a transmission device divides data to be transmitted into a plurality of pieces and repeatedly transmits the divided data like a carousel. In the data carousel method, original dat a D is divided into a plurality of pieces (N pieces) of partial data arrays as shown below, and the partial data is repeatedly transmitted in several times.

Original data $D = \{D_1, D_2, ..., D_n\}$

Transmission data $D' = \{D_1, D_2, ..., D_n, D_1, D_2, ..., D_n, D_1, D_2, ... \}$

Reception data $D'' = \{D_1, D_3, ..., D_n, D_1, D_2 \}$

According to the method, as in the above-described example, even if the reception data $D_2$ is lost, the same data is transmitted again in the next cycle. Accordingly, it is possible to restore the original data. However, the data amount to be transmitted increases. Moreover, even if the next cycle is transmitted, the same portion may be lost. In such a case, it may be necessary to wait for another cycle.

Moreover, a data transfer method is provided in which redundant data referred to as parity is added to data to be transmitted in advance and the data is transmitted. In the data transfer method, as shown below, if original data D is represented by n pieces of partial data arrays, operation of exclusive OR (XOR) is performed on each of certain pieces (m pieces) of partial data. The result of the XOR operation is transmitted together with the original data as the parity data. Hereinafter, "+" denotes an XOR operator.

Original data $D = \{D_1, D_2, ..., D_n\}$

Transmission data $D' = \{D_1, D_2, ..., D_m, P_1, D_{m+1}, ..., D_n, P_k\}$

Parity data $P_k = D_k + D_{k+1} + ... + D_{k+m-1}$

According to the method, even if one of the partial data is lost during the transmission, the lost data can be restored by performing the XOR operation on the remaining partial data and the parity data. An example of the restoration is shown below.

Original data $D = \{ D_1, D_2, D_3 \}$

Transmission data $D' = \{ D_1, D_2, D_3, P_1 \}$

Parity data $P_1 = D_1 + D_2 + D_3$

Reception data $D'' = \{D_1, D_2, P_1 \}$ ($D_3$ is lost)

Restoration of the lost data: $D_3 = D_1 + D_2 + P_1$

In the restoration, it is possible to restore the loss of only one data per one parity data, however, it is not possible to restore the data if a plurality of pieces of data is lost. According to Japanese Unexamined Patent Application Publication No. 5-235979, the tolerance to the subsequent lost data is increased by performing the XOR operation on not subsequent partial data but at every n-1 pieces of partial data. However, the tolerance is decreased if the data is randomly lost.

In view of the above, a data transfer method capable of generating a plurality of parity, and restoring loss of one or more pieces of data has been proposed. In the method, an error correction code such as a Reed-Solomon code for generating parity is used. According to the Reed-Solomon code, as shown below, original data D is divided into a plurality of pieces (n pieces) of partial data, and k pieces of linear independent vectors $\alpha_{11}, \alpha_{21}, \alpha_{31}, ...\alpha n_1$ are selected

from a finite field referred to as a Galois field to generate parity data.

Original data $D = \{D_1, D_2, D_3, ..., D_n\}$

Transmission data $D' = \{C_1, C_2, C_3, ..., C_m\}$

Parity data $C_k = \alpha_{11} \cdot D_1 + \alpha_{21} \cdot D_2 + ... + \alpha_{n1} \cdot D_n$

In restoration of the data, if n pieces of partial data has been acquired, the original data can be obtained by forming a matrix A of n x n = $(\alpha_{ij})$ $(1 \le i, j \le n)$ from corresponding n pieces of vectors, and multiplying by an inverse matrix of A on the acquired partial data. That is, the original data is restored as follows.

$$A \cdot \begin{bmatrix} D_1 \\ \vdots \\ D_n \end{bmatrix} = \begin{bmatrix} C_1 \\ \vdots \\ C_m \end{bmatrix} \qquad \cdots \quad (Expression - 1)$$

$$\begin{bmatrix} D_1 \\ \vdots \\ D_n \end{bmatrix} = A^{-1} \cdot \begin{bmatrix} C'_1 \\ \vdots \\ C'_m \end{bmatrix} \qquad \cdots \quad (Expression - 2)$$

In the equation, a calculation of an amount of $O(n^3)$ is o be performed to obtain the inverse matrix of n x n. Accordingly, if the value of n is increased, a very long calculation time is required.

In consideration of the above, as discussed in Japanese Unexamined Patent Application Publication No. 2005-223683, the method of generating parity data using only XOR to reduce an calculation amount has been provided, in the case of one-to-one communication.

So far, the case of one transmission device has been described. However, if the number of the transmission device is only one, the transmission device is overloaded. Moreover, if a communication speed of the reception device is faster than that of the transmission device side, the speed of the transmission device becomes a bottleneck, and the data may not be transferred at a speed expected at the reception device. In such a case, it is possible to distribute the load of the transmission device by providing a plurality of transmission devices and allowing the reception device to receive data from any of the transmission devices.

If the above-described data transfer method is extended to the case where the plurality of transmission devices is provided, the following two methods can be applied.

- Data transfer method A: All transmission devices store original data and transmit the data using the above method
- Data transfer method B: Original data is divided into a plurality of pieces of data to form separated data and each transmission device transmits the separated data respectively

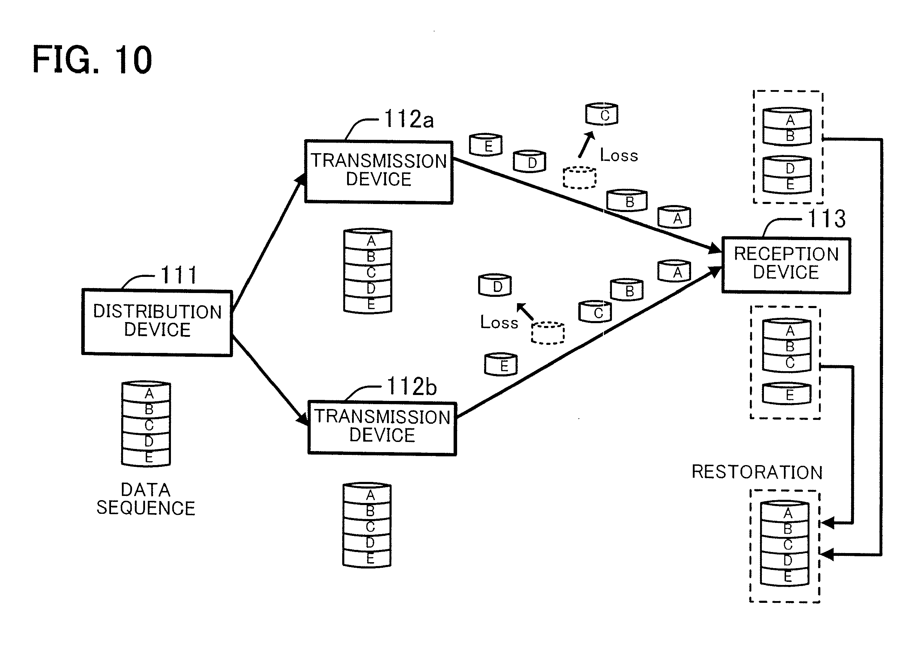

Fig. 10 is a block diagram illustrating an example of operation performed in the conventional data transfer method A. In the data transfer method A, a distribution device 111, two transmission devices 112a and 112b, and a reception device 113 are provided. The distribution device 111 transmits the whole of original data composed of partial data A, B, C, D and E to both the transmission devices 112a and 112b. Then, the transmission devices 112a and 112b respectively transmit the whole of the partial data A, B, C, D, and E to the reception device 113. The reception device 113 restores the original data from the partial data received from the transmission devices 112a and 112b.

According to the data transfer method A, as the number of the transmission devices increases, the possibility to restore the original data also increases. However, since each transmission device has the same data, the amount of wasteful data stored in the transmission devices and the amount of total encoded data increase.

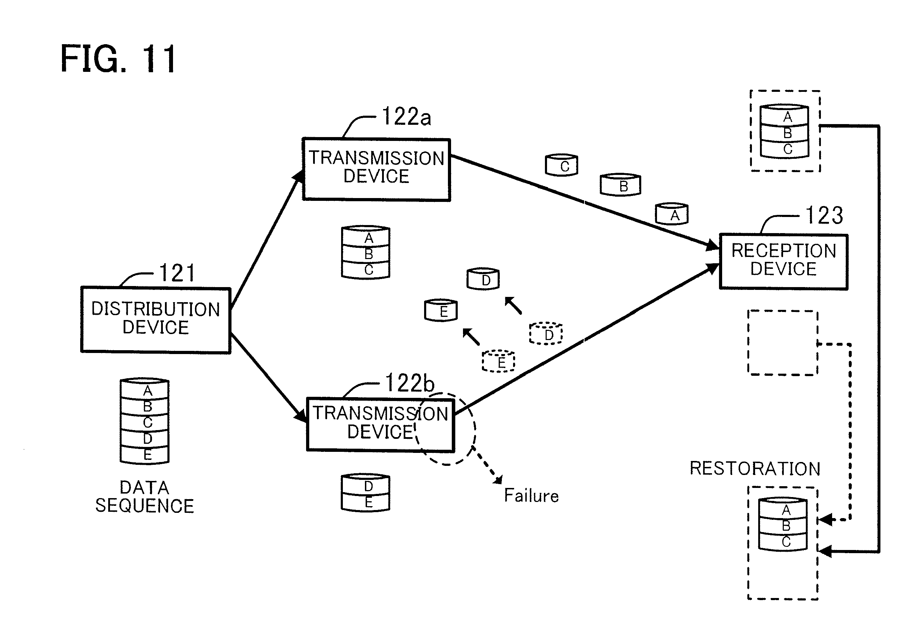

Fig. 11 is a block diagram illustrating an example of operation performed in the conventional data transfer method B. In the data transfer method B, a distribution device 121, two transmission devices 122a and 122b, and a reception device 123 are provided. The distribution device 121 divides original data composed of partial data A, B, C, D, and E to be transmitted, and transmits the partial data A, B, and C to the transmission device 122a, and the partial data D, and E to the transmission device 122b. The reception device 123 restores the original data from the partial data received from the transmission devices 122a and 122b.

According to the data transfer method B, it is possible to reduce the capacity of storage devices in the transmission devices. However, in a case where the partial data is not completely received from one of the transmission devices, the original data may not be restored.

For example, as shown in Fig. 11, if a failure occurred in transmission device 122b, the partial data D and E would not be sent from transmission device 122b. As a result, data D and E would be lost and reception device 123 could not restore the original data including data sequence A, B, C, D, and E. Also, the method of generating parity data using only XOR, which is disclosed in Japanese Unexamined Patent Application Publication No. 2005-223683 as described above, cannot be applied in this case because the method is intended for one-to-one communication and no configurations needed for transmitting data through a plurality of transmission devices are disclosed therein.

Moreover, for hard disk drives (HDDs) or data communication, error correction methods using a low density parity check (LDPC) matrix have been proposed. However, in the error correction methods, because repetitive operation is used, huge amount of calculation is required.

It is desirable to provide an apparatus, a system, a method and a computer readable medium capable of efficiently distributing data, transferring the data, and restoring the data.


SUMMARY


According to an embodiment of one aspect of the present invention, there is provided a system (and a method) for dividing an original data into N pieces of partial data and generating L pieces of encoded data on the basis of the N pieces of partial data wherein N is a natural number greater than 1 and L is a natural number equal to or greater than N. Each of the L pieces of encoded data can include a header part and a operation result part, the header part including selection data identifying a subset of the N pieces of partial data on which a predetermined operation is performed, the operation result part being generated by performing the predetermined operation on partial data included in the subset identified by the header data. The L pieces of encoded data can be divided into one or more transmission data groups and each of the one or more transmission data groups transmitted to one of one or more first communication links.

According to an embodiment of another aspect of the present invention, there is provided a system (and a method) for receiving one or more transmission data groups each transmitted from the transmission device through one of the one or more second communication links, acquiring a plurality of pieces of encoded data from the one or more transmission data groups received to generate a selection matrix and an operation result matrix by using the plurality of pieces of encoded data acquired. The selection matrix can include as a row thereof a piece of selection data included in the header part of each of the plurality of pieces of encoded data, the operation result matrix including as a row thereof a piece of data included in the operation result part of each of the plurality of pieces of encoded data, and converting the selection matrix and the operation result matrix into an optimum selection matrix and an optimum operation result matrix, respectively. This may be by performing a predetermined matrix operation on both rows at the same position of the selection matrix and the operation result matrix.

According to embodiments of the present invention, it is possible to efficiently distribute, transfer, and restore data.

Preferred features of the present invention will now be described, purely by way of example, with reference to the accompanying drawings, in which:-

Fig. 1 is a block diagram illustrating an example of a configuration of a multicast distribution system according to an embodiment of the present invention;
Fig. 2 is a block diagram illustrating an example of a configuration of each device in the multicast distribution system according to the embodiment of the present invention;
Fig. 3 is a flowchart illustrating an example of encoding matrix generation process according to the embodiment of the present invention;
Fig. 4 is a view illustrating an example of the encoding matrix according to the embodiment of the present invention;
Fig. 5 is a flowchart illustrating an example of distribution process according to the embodiment of the present invention;
Fig. 6 is a flowchart illustrating an example of encoding process according to the embodiment of the present invention;
Fig. 7 is a schematic diagram illustrating an example of the encoding process according to the embodiment of the present invention;
Fig. 8 is a flowchart illustrating an example of decoding process according to the embodiment of the present invention;
Fig. 9 is a schematic diagram illustrating an example of the decoding process according to the embodiment of the present invention;
Fig. 10 is a block diagram illustrating an example of operation performed in a conventional data transfer method A; and

Fig. 11 is a block diagram illustrating an example of operation performed in a conventional data transfer method B.

DESCRIPTION OF THE PREFERRED EMBODIMENT

Hereinafter, an embodiment of the present invention will be described with reference to the drawings.

In the present embodiment, a description will be made with respect to a multicast distribution system to which a data transfer system and a data transfer method according to the present invention are applied.

First, a configuration of the multicast distribution system is described.

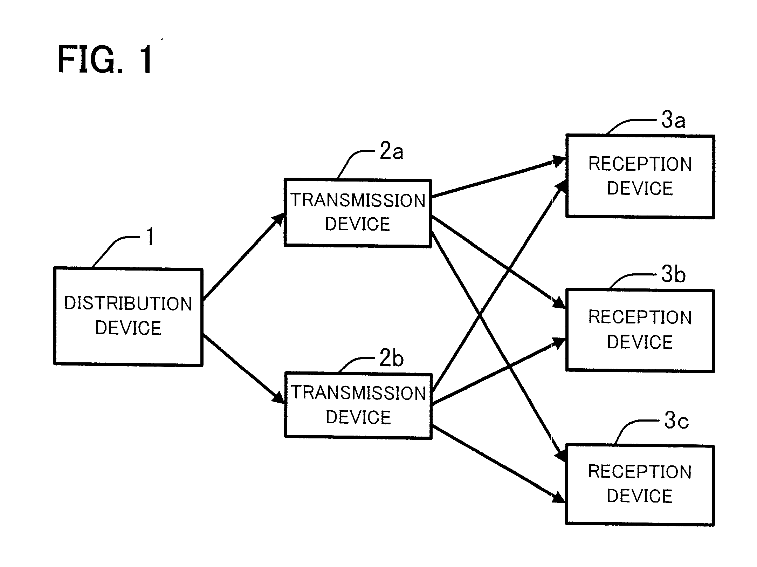

Fig. 1 is a block diagram illustrating an example of the configuration of the multicast distribution system according to the present embodiment. The multicast distribution system includes a distribution device (encoding device) 1, transmission devices 2a and 2b, and reception devices (decoding devices) 3a, 3b, and 3c. The distribution device 1 and the transmission devices 2a, and the distribution device 1 and the transmission devices 2b are respectively connected with each other through first communication links. The transmission device 2a and the reception devices 3a, 3b, and 3c, and the transmission device 2b and the reception devices 3a, 3b, and 3c are respectively connected with each other through second communication links.

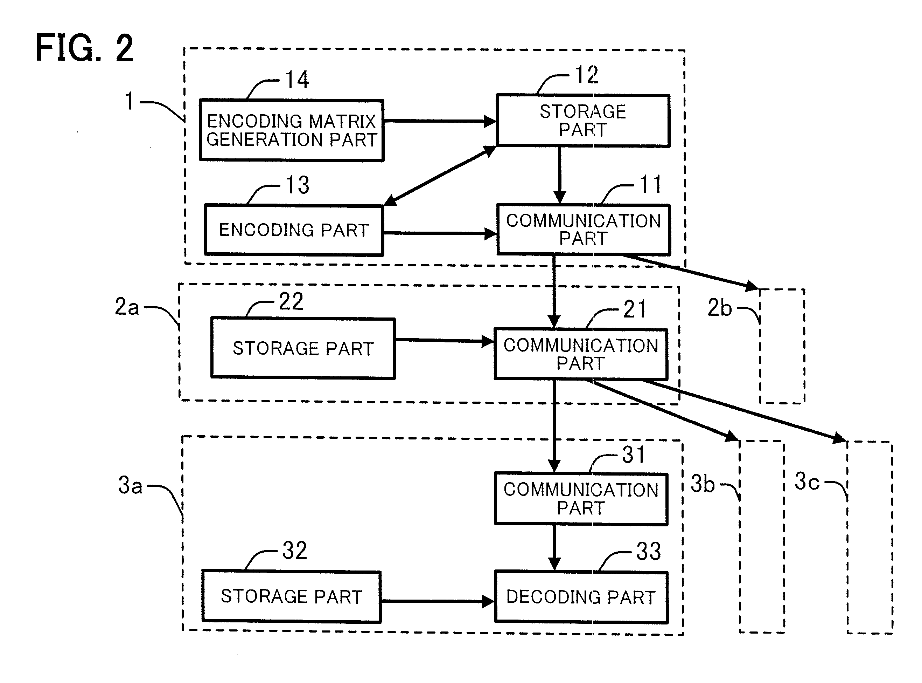

Fig. 2 is a block diagram illustrating an example of a configuration of each device in the multicast distribution system according to the present embodiment. The distribution device 1 includes a communication part 11, a storage part 12, an encoding part 13, and an encoding matrix generation part 14. The transmission devices 2a and 2b have configurations similar to each other, and each of the transmission devices includes a communication part 21 and a storage part 22. The reception devices 3a, 3b, and 3c have configurations similar to each other, and each of the reception devices includes a communication part 31, a storage part 32, and a decoding part 33.

Now, operation of the multicast distribution system is described.

In the multicast distribution system, the distribution device 1 divides original data into N (an integer number greater than 1) pieces of partial data, encodes the partial data to L (an integer number greater than 1) pieces of encoded data using an encoding matrix, and transmits the encoded data to the transmission devices 2a and 2b through first communication links. The transmission devices 2a and 2b transmit the received encoded data to the reception devices 3a, 3b, and 3c by multicast respectively through second communication links. The reception devices 3a, 3b, and 3c respectively decode the received encoded data and restore the original data.

Now, encoding matrix generation process performed by the distribution device 1 is described.

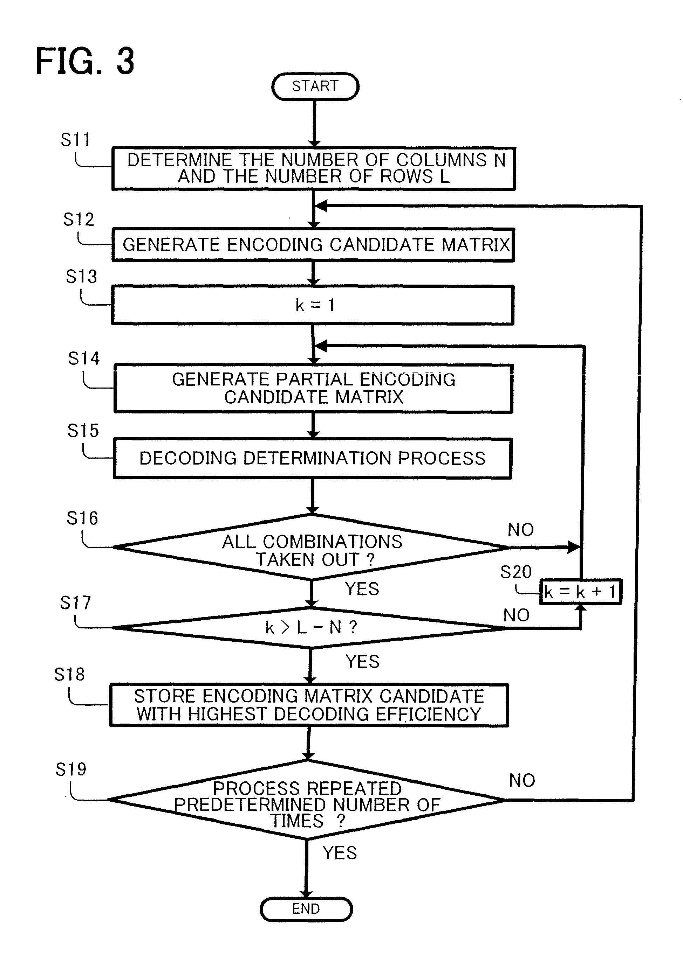

Fig. 3 is a flowchart illustrating an example of the encoding matrix generation process according to the present embodiment. The encoding matrix generation part 14 determines the number of columns (the number of partial data) N of an encoding matrix and the number of rows (a maximum number of encoded data) L of the encoding matrix (step S11). It is assumed that original data D is divided into N pieces of partial data $\{D_1, D_2, ..., D_N\}$, the N pieces of the partial data is converted into encoded data, the encoded data is distributed to M-units of transmission devices, and the distributed data is transmitted to the reception devices. Here, N can be any natural number, and as the number becomes larger, the efficiency increases. Then, the encoding matrix generation part 14 sets distribution size ratios $S_1, S_2, ..., S_M$ that are ratios of the numbers of the partial data that is allotted to each transmission device with respect to the total number of the partial data, and sets a sum S that is the total of $S_1, S_2, ..., S_M$. Here, $S_1, S_2, ..., S_M$ are determined based on transmission device information that is information of each transmission device and includes storage capacities, communication speeds, loads, and the like of the transmission devices. For example, if a transmission device i has a large storage capacity, a value of $S_i$ is set to be large. In a case where $S_1, S_2, ..., S_M$ can be varied, S is set to a large value, for example, greater than or equal to the total of varied $S_1, S_2, ..., S_M$, thereby increasing the possibility that the reception device recovers the original data. For example, even if one transmission device failed, the reception device may restore the original data by using data received through the other transmission devices.

Then, the encoding matrix generation part 14 sets the number L to be L = N x S.

The encoding matrix generation part 14 sets that h = (S - 1) x N + 1, and generates encoding candidate matrixes of L rows and N columns that are composed of 0 and 1 using a natural random number such that the number of 1 in each column in an encoding candidate matrix A is to be h (step S12). As a result, the number of 1 in encoded rows becomes smaller than that of 0.

Then, the encoding matrix generation part 14 performs candidate evaluation process (steps S13 to S18) regarding the encoding candidate matrix. First, the encoding matrix generation part 14 sets that k = 1 (step S13), takes a combination of k rows out of the rows of the encoding candidate matrix, and generates a partial encoding candidate matrix which is a matrix of (L - k) rows generated by taking k rows out of the encoding candidate matrix (step S14). Then the encoding matrix generation part 14 performs decoding determination process, which will be described later, with respect to the partial encoding candidate matrix, and records the number of executions of the decoding determination process and the number of times the decoding determination process has determined that the encoded data can be decoded by using the partial encoding candidate matrix (step S15). Then, the encoding matrix generation part 14 determines whether all combinations of k rows are taken out. If all of the combinations of k rows are not taken out (No in step S16), the process proceeds to step S14, and the encoding matrix generation part 14 takes out a next combination. If all of the combinations are taken out (Yes in step S16), the encoding matrix generation part 14 determines whether a condition k > L - N is satisfied. If the condition is not satisfied (No in step S17), the encoding matrix generation part 14 increases the number of k by 1 (step S20) and the process proceeds to step S14. If the condition is satisfied (Yes in step S17), the encoding matrix generation part 14 sets that (decoding efficiency) = (the number determined to be decodable) / (the number of executions of decoding determination process), and store in the storage part 12 the encoding candidate matrix that has the highest decoding efficiency among generated encoding candidate matrixes (step S18).

If the k is increased, the number of combinations of k-row becomes huge. Accordingly, the encoding matrix generation part 14 finishes the candidate evaluation process (steps S13 to S18) at an appropriate condition (for example, in a case where k exceeds a predetermined value).

For this purpose, the encoding matrix generation part 14 determines whether the candidate generation process and the candidate evaluation process is repeated a predetermined number of times. For example, this determination can be done by determining whether k exceeds a predetermined value or not. If it is determined that the process is not repeated for the predetermined number of times (No in step S19), the process returns to step S12. If it is determined that the process is repeated for the predetermined number of times (Yes in step S19), the flow is finished. The encoding matrix generation part 14 sets the encoding candidate matrix stored in the storage part 12, that is, the encoding candidate matrix that has the highest decoding efficiency, as the encoding matrix A.

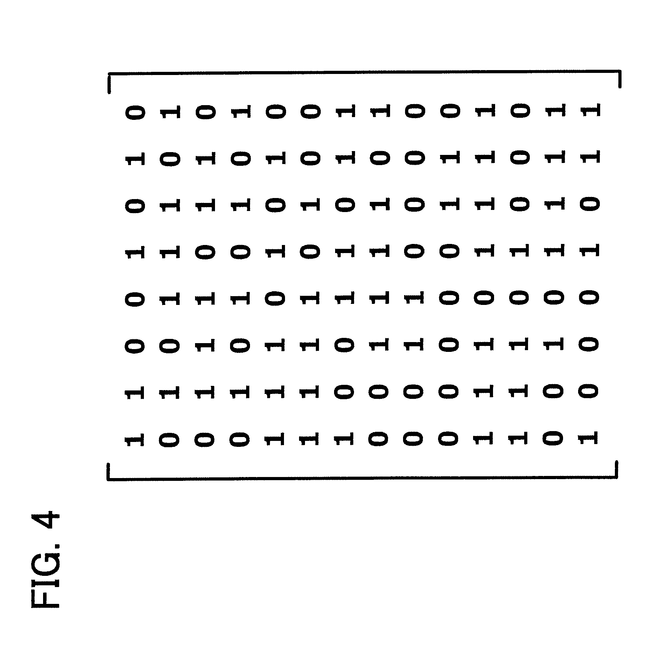

Fig. 4 is a view illustrating an example of the encoding matrix according to the embodiment of the present invention. It is assumed that the number of partial data N = 8 and the number of transmission devices M = 2. Moreover, due to a reason that, for example, a storage capacity of the transmission device 2a is larger than that of the transmission device 2b, the distribution size ratio is assumed that $S_1 = 4 / 4 = 1$, $S_2 = 3 / 4 = 0.75$. Accordingly, S = 1.75, and L = N x S = 8 x 1.75 = 14, and the encoding matrix A is to be 14 rows and 8 columns.

According to the encoding matrix generation process, it is possible to generate the encoding matrix A that has a high decoding efficiency.

It is noted that the encoding matrix A can be generated outside the device in advance and stored in the distribution device 1. In such a case, the distribution device 1 does not need to have the encoding matrix generation part 14.

Now, distribution process performed in the distribution device 1 is described.

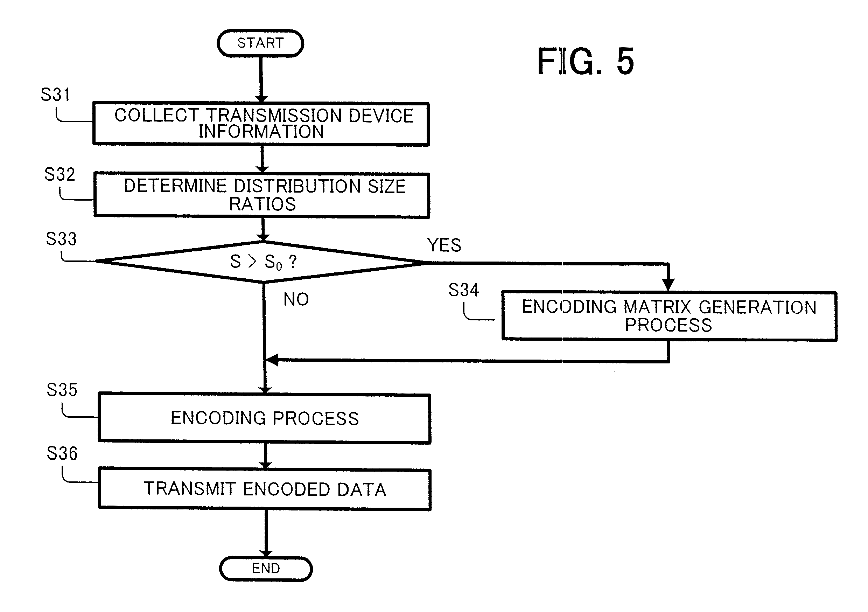

Fig. 5 is a flowchart illustrating an example of the distribution process according to the embodiment of the present invention. A value of S regarding an encoding matrix A that has been generated in advance is set as $S_0$. First, the encoding matrix generation part 14 collects transmission device information about the transmission devices 2a and 2b to be used for transmission (step S31). Then, the encoding matrix generation part 14 determines distribution size ratios $S_1$ and $S_2$ of the transmission devices 2a and 2b based on the transmission device information, and sets a sum of $S_1$ and $S_2$ as S (step S32). The encoding matrix generation part 14 determines whether the value of S is larger than that of $S_0$ (step S33). If it is determined that the value of S is larger than that of $S_0$ (Yes in step S33), the encoding matrix generation part 14 performs encoding matrix generation process for generating a new encoding matrix A using the value of S (step S34), and the process proceeds to step S35. If it is determined that the value of S is not larger than that of $S_0$ (No in step S33), the process proceeds to step S35.

Then, the encoding part 13 generates 1 pieces of encoded data by performing encoding process of the original data D stored in the storage part 12 (step S35). The encoded data includes a header part and a data part. The communication part 11 transmits L x $S_1$ / S pieces of encoded data out of L pieces of encoded data to the transmission device 2a, and transmits (distributes) L x $S_2$ / S pieces of encoded data to the transmission device 2b (step S36). Then, the flow is finished.

In a case where N = 2, M = 2, $S_1 = 4 / 4 = 1$, and $S_2 = 3 / 4 = 0.75$, values are set to be S = 1.75 and L = 14. Accordingly, by the distribution process, 8 pieces of partial data is generated from the original data and 14 pieces of encoded data is generated. Moreover, L x $S_1$ / S = 8 pieces of encoded data is transmitted from the distribution device 1 to the transmission device 2a, and L x $S_2$ / S = 6 pieces of encoded data is transmitted from the distribution device 1 to the transmission device 2b.

According to the distribution process, depending on performance differences of the transmission devices, it is possible to freely set the distribution size ratio. Accordingly, each transmission device can efficiently transmit the encoded data.

Now, encoding process performed by the distribution device 1 is described.

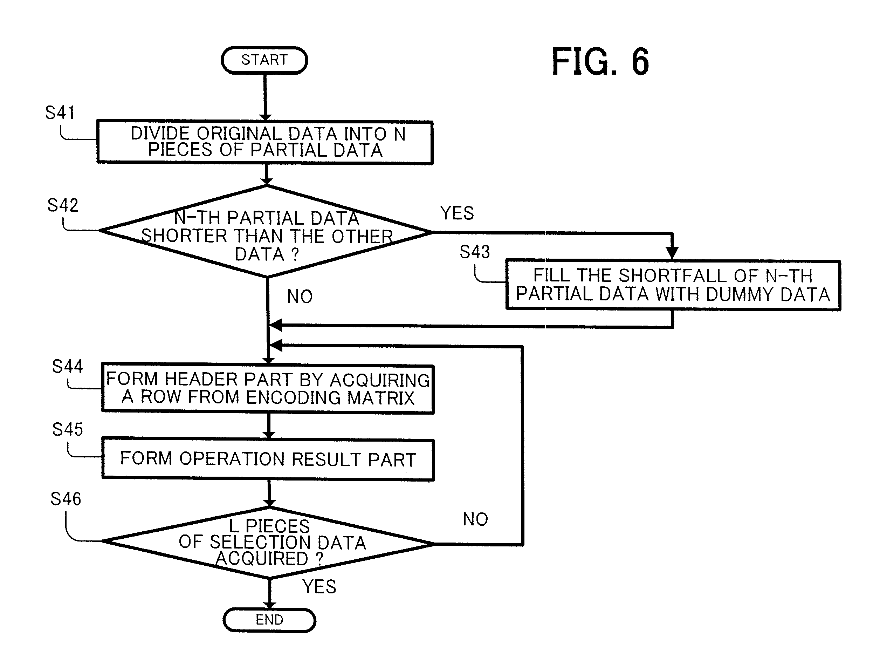

Fig. 6 is a flowchart illustrating an example of the encoding process according to the embodiment. The encoding part 13 divides the original data D stored in the storage part 12 into N pieces of data, numbers the data, and generates partial data {$D_1$, $D_2$, ..., $D_N$ } (step S41). The data is divided in order from the top such that the N pieces of data have the same size. However, the size of the last N-th partial data $D_N$ is not always the same as that of the other data. Then, the encoding part 13 determines whether a length of the N-th partial data is short with respect to that of the other data. If it is determined that the length is short (Yes in step S42), the encoding part 13 fills the short of the N-th partial data with dummy data (for example, O) (step S43), and the process proceeds to step S44. If it is determined that the length of the n-th data is equal to that of the other data (No in step S42), the process proceeds to the next process. The encoding part 13 acquires rows one by one from the encoding matrix A to form selection data, and the selection data is formed as header parts of encoded data (step S44).

The encoding part 13 acquires numbers of positions where bits in the selection data are 1, and acquire partial data corresponding to the numbers. Then, the encoding part 13 performs XOR operation on each bit position with respect to the acquired partial data, and forms an operation result part of the encoded data based on a result of the operation (S45).

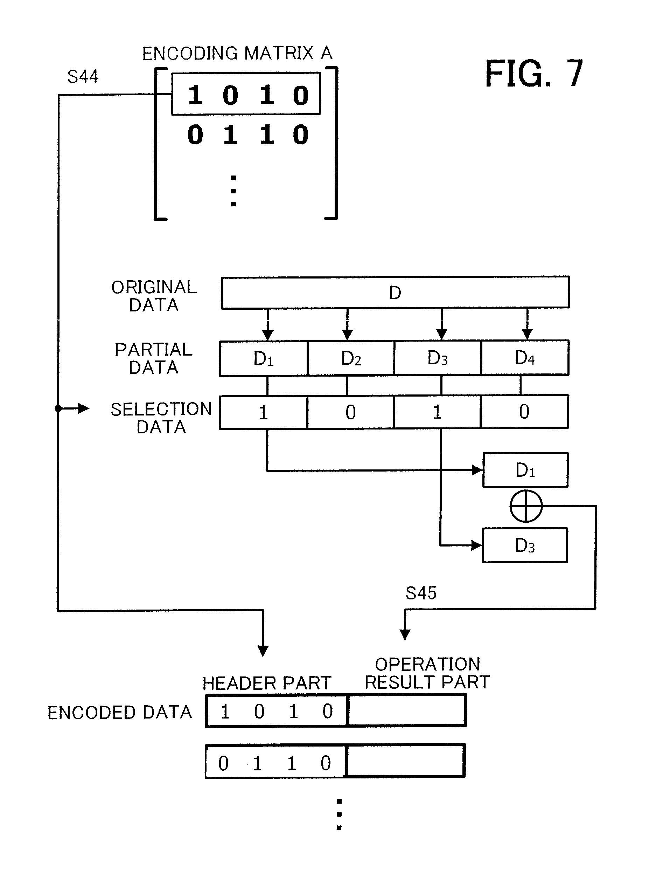

Fig. 7 is a schematic diagram illustrating an example of the encoding process according to the embodiment. In this example, a case where N = 4 is described. In step S41, the encoding part 13 divides the original data D into partial data { $D_1$, $D_2$, $D_3$, $D_4$}. In step S44, the encoding part 13 acquires rows in the encoding matrix A one by one, and forms selection data and header parts. In this example, a first row {1, 0, 1, 0} of the encoding matrix A is used as the selection data. In step S45, the encoding part 13 acquires partial data $D_1$ and $D_3$ out of the partial data according to positions where bits in the selection data are 1, performs XOR operation with respect to the acquired partial data $D_1$ and $D_3$ at each bit position, and forms an operation result part of the encoded data based on a result of the operation. Then, the encoding part 13 repeats similar process with respect to a second row {0, 1, 1, 0} and after the second row of the encoding matrix A.

The encoding part 13 determines whether L pieces of selection data has been acquired (whether L pieces of data parts have been generated) (step S46). If it is determined that the L pieces of selection data has not been acquired (No in step S46), the process returns to step S44 and the encoding part 13 acquires the next selection data. If it is determined that the L pieces of selection data has been acquired (Yes in step S46), the flow is finished.

According to the encoding process, it is possible to generate the L pieces of encoded data that includes the header parts formed by the selection data and the operation result parts formed by the operation result of the partial data. Moreover, since the operation used for the encoding operation is the XOR operation, the loads to the distribution devices are small and the encoding can be performed at a high speed.

Now, transmission process performed by the transmission devices 2a and 2b is described.

The communication parts 21 of the transmission devices 2a and 2b store a plurality of pieces of encoded data (a transmission data group) received from the distribution device 1 in the storage part 22. Then, the communication parts 21 of the transmission devices 2a and 2b transmit the encoded data stored in the storage part 22 to the reception devices 3a, 3b, and 3c.

Decoding process performed by the reception devices 3a, 3b, and 3c is described.

In a stack of the storage part 32, it is possible to stack N pieces of stack data that has an encoded data length. Similarly to the encoded data, the stack data has a header part and an operation result part. The header parts of the N pieces of stack data can be considered as a matrix (called a selection matrix) that uses the header parts of each stack data as rows, and the operation result parts of the n pieces of stack data can be considered as a matrix (called an operation result matrix) that uses the operation result parts of each stack data as rows.

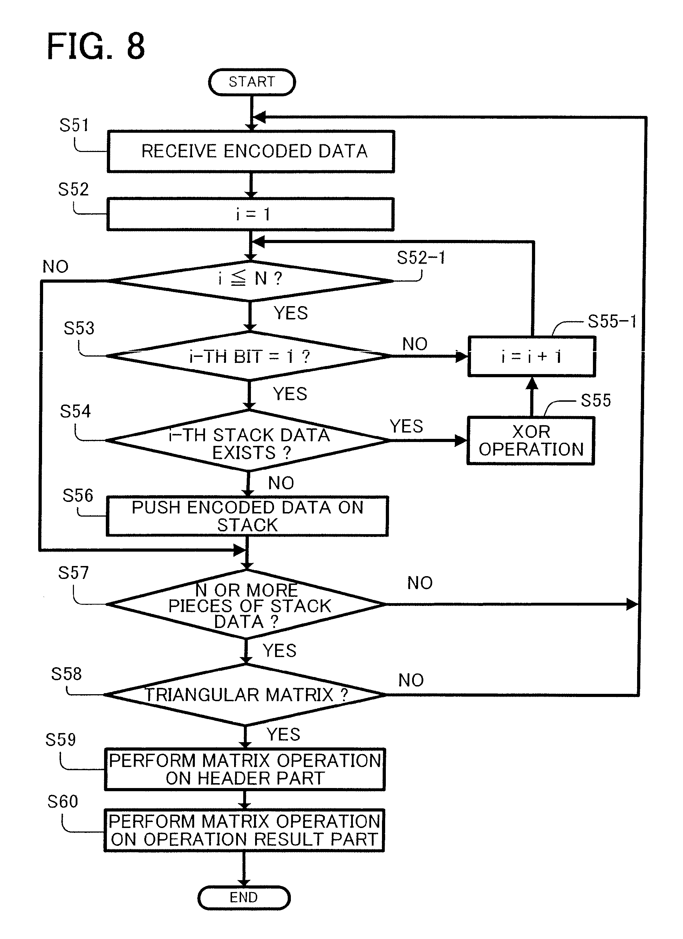

Fig. 8 is a flowchart illustrating an example of decoding process according to the present embodiment. The communication part 31 receives one piece of encoded data from the transmission devices 2a and 2b (step S51). Then, the communication part 31 sets to be i = 1 (step S52), and determines whether i is less than or equal to N (step S52-1). If it is determined that i is not less than or equal to N (NO in step S52-1), the process proceeds to step S57. If it is determined that i not less than or equal to N (YES in step S52-1), the decoding part 33 determines whether i-th bit of the header part of the encoded data is 1 (step S53). If it is determined that the i-th bit is not 1 (No in step S53), the decoding part 33 increases i by 1 (step S55-1), and the process returns to step S53. If it is determined that the i-th bit is 1 (Yes in step S53), the decoding part 33 determines whether i-th stack data exist in the stack of the storage part 32 (step S54). If it is determined that the i-th encoded data exists (Yes in step S54), the decoding part 33 performs XOR operation with respect to the encoded data and the i-th stack data in the stack at each bit position, and updates the encoded data in the stack on the operation result (step S55). If it is determined that the i-th stack data does not exist (No in step S54), the decoding part 33 pushes the encoded data on the stack as new stack data (step S56).

Then, the decoding part 33 determines whether the number of pieces of the stack data is N or more (step S57). If it is determined that the number of pieces of the stack data is less than N (No in step S57), the process returns to step S51, and the decoding part 33 receives the next encoded data. If it is determined that the number of pieces of the stack data is N or more (Yes in step S57), the decoding part 33 determines whether the selection matrix composed of the header parts of the stack data can be converted into a triangular matrix (an upper or lower triangular matrix) (step S58). If it is determined that the selection matrix cannot be converted into the triangular matrix (No in step S58), the decoding part 33 determines that it is not possible to decode the data, the process returns to step S51, and receives the next encoded data. If it is determined that the selection matrix can be converted into the triangular matrix (Yes in step S58), the decoding part 33 determines that it is possible to decode the data. Then, the decoding part 33 performs matrix operation on the selection matrix to form an optimum selection matrix as a unit matrix (step S59), and performs similar matrix operation with respect to the operation result matrix that is the matrix composed of the operation result parts of the stack data (step S60). According to the matrix operation, the data matrix is converted into a optimum operation result matrix that has the original partial data as each row, and the process is end.

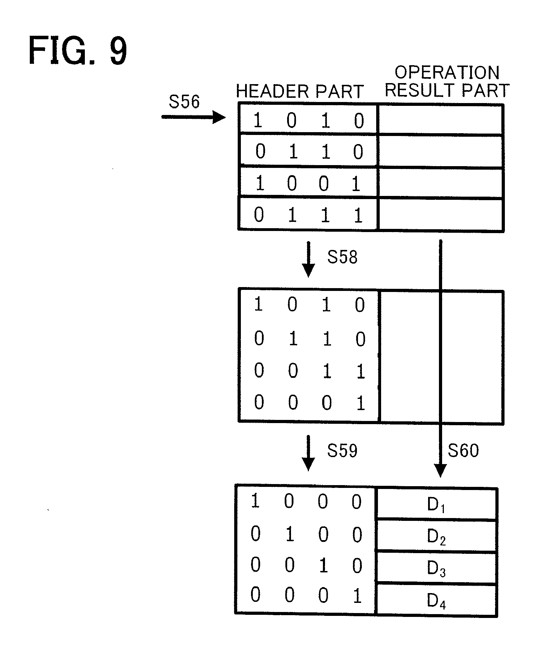

Fig. 9 is a schematic diagram illustrating an example of the decoding process according to the present embodiment. In this example, a case where N = 4 is described. According to the process up to step S56, the decoding part 33 pushes the stack data on the stack. Then, the header parts of the stack data forms the rows of the header matrix, and the operation result parts of the stack data forms the rows of the operation result matrix. According to the process up to step S58, the decoding part 33 performs the matrix operation until the selection matrix forms a triangular matrix. Further, in step S59, the decoding part 33 performs the matrix operation to form a unit matrix as an optimum selection matrix from the selection matrix. In the step S60, the decoding part 33 performs matrix operation similar to that performed on the selection matrixes on the operation result matrix. Then, the operation result matrix is converted into an optimum operation result matrix having rows each including the partial data $\{D_1, D_2, D_3, D_4\}$ included in the original data, respectively.

In the decoding process, the decoding part 33 can form the unit matrix from the selection matrix using a Gauss elimination method. Accordingly, until the selection matrix is converted into the triangular matrix, the reception of the encoded data and the matrix operation with respect to the selection matrixes are continued, and as the result of the operation, if the selection matrix is converted into the triangular matrix, it is determined that the data can be decoded. Further, the decoding part 33 performs the matrix operation to form the unit matrix from the selection matrix. It is noted that in the matrix operation, any method other than the Gauss elimination method can be used as long as the unit matrix is formed from the selection matrixes.

In the decoding process, it is possible to decode the original data from the operation result parts of the N or more pieces of encoded data. The number of the encoded data necessary for the decoding varies depending on which encoding matrix A is used. As the arrangement of 1 in the encoding matrix A becomes more random, the decoding efficiency increases. Moreover, since the XOR operation is used for the decoding, the load to the reception device is reduced and the decoding can be performed at a high speed.

Now, decoding determination process performed by the distribution device 1 is described.

The encoding matrix generation part 14 executes steps S51 to 58 in the above-described decoding process as the decoding determination process (step S15 in Fig. 3). In the process, the encoding matrix generation part 14 performs input of each row of the partial candidates for an encoding matrix instead of the reception of the header parts of the encoded data. The encoding matrix generation part 14 determines that decoded data generated based on a selection candidate matrix, which is a partial candidate matrix for the encoding matrix, can be decoded in a case where the partial candidate matrix is converted into a matrix including the triangular matrix, and determines that the decoded data cannot be decoded in a case where all rows of the partial candidate matrix are input but the partial candidate matrix is not converted into a matrix including the triangular matrix.

According to the decoding process and the decoding determination process, the reception devices 3a, 3b, and 3c can decode the original data if the reception devices fully receive $N + \alpha$ $(1 < \alpha \leq (L - N))$ or more pieces of encoded data out of the L pieces of encoded data. Similarly to the above-described decoding efficiency, the value of $\alpha$ varies depending on the encoding matrixes A, and an encoding matrix candidate having a minimum $\alpha$ (close to 1) can be selected as the encoding matrix A.

According to the present embodiment, the data amount to be transmitted by the transmission devices can be reduced and the reception devices can decode the data even if the whole of the encoded data is not received. As a result, it is possible to improve the temporal efficiency necessary for the data transfer.

The distribution devices and the reception devices according to the present embodiment can be readily applied to information processing devices, and it is possible to further increase performance of the information processing devices. The information processing devices include, for example, servers, personal computers (PCs), or the like.

Further, a program for implementing the above-described each step in computers constituting the distribution device and the reception device can be provided. The above-described programs can be implemented in the computers constituting the distribution device and the reception device by storing the programs on a computer-readable recording medium. The computer-readable recording medium includes internal memory devices mounted in computers such as a read-only memory (ROM), a random access memory (RAM); transportable storage media such as a compact disc read only memory (CD-ROM), a flexible disk, a Digital Versatile Disc (DVD), a magneto-optical disk, an integrated circuit card (IC card); data bases for storing computer programs; other computers; and data bases for the computers. Further, transmission media on lines can be included.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A system, comprising:

   a distribution device connected to one or more first communication links, for dividing an original data into N pieces of partial data and generating L pieces of encoded data on the basis of the N pieces of partial data wherein N is a natural number greater than 1 and L is a natural number equal to or greater than N, each of the L pieces of encoded data including a header part and a operation result part, the header part including selection data identifying a subset of the N pieces of partial data on which a predetermined operation is performed, the operation result part being generated by performing the predetermined operation on partial data included in the subset identified by the selection data, wherein the L pieces of encoded data are divided into one or more transmission data groups and each of the one or more transmission data groups is transmitted to one of the one or more first communication links; and
   a transmission device for receiving one of the one or more transmission data groups through one of the one or more first communication links, and transmitting the one of the one or more transmission data groups to one or more second communication links.

2. The system of claim 1, further comprising:

   a reception device for receiving one or more transmission data groups each transmitted from the transmission device through one of the one or more second communication links, and acquiring a plurality of pieces of encoded data from the one or more transmission data groups received to generate a selection matrix and an operation result matrix by using the plurality of pieces of encoded data acquired, wherein the selection matrix includes as a row thereof a piece of selection data included in the header part of each of the plurality of pieces of encoded data, the operation result matrix includes as a row thereof a piece of data included in the operation result part of each of the plurality of pieces of encoded data, and the selection matrix and the operation result matrix are converted into an optimum selection matrix and an optimum operation result matrix, respectively, by performing a predetermined matrix operation on both rows at the same position of the selection matrix and the operation result matrix.

3. The system of claim 1 or 2, wherein the L pieces of encoded data are the same in length and the predetermined operation is an exclusive OR operation which is performed on each bit of partial data included in the subset identified by the selection data, to generate the operation result part of each of the L pieces of encoded data.

4. The system of claim 3, wherein the selection data comprises a N-bit sequence in which each bit thereof one-to-one corresponds, in the order of bit positions, to one of the N pieces of partial data in a predetermined order, and one or more pieces of partial data each corresponding to bit having a value of 1 in the selection data are identified as the subset of the N pieces of partial data.

5. The system of claim 4, wherein the predetermined order is the order of sequentially dividing the original data into the N pieces of partial data.

6. The system of claim 4 or 5, wherein, in L pieces of selection data each included in one of the L pieces of encoded data, the number of bits having the value of 1 is less than the number of bits having the value of 0.

7. The system of claim 4, 5 or 6, wherein L pieces of selection data each included in one of the L pieces of encoded data are different from each other, and bits having the value of 1 are randomly positioned within the N-bit sequence included in each of the L pieces of selection data.

8. The system of claim 2 or any claim dependent thereon, wherein a Gaussian elimination method is employed as the predetermined matrix operation.

9. The system of claim 4 or any claim dependent thereon, wherein the selection matrix has rows each included in the N-bit sequence in the order of bit position, the operation result matrix has rows each including as an element thereof a bit included in the operation result part of each of the plurality of encoded data, a unit matrix having N rows and N columns and a matrix having N rows are generated as the optimum selection matrix and the optimum operation result matrix, respectively, by using N pieces of encoded data acquired from the one or more transmission data groups received, and rows included in the optimum operation result matrix are connected together in the ascending order of row numbers thereof to restore the original data.

10. The system of claim 9, wherein one or more pieces of encoded data are acquired from the one or more transmission data groups received when it is determined that the selection matrix can not be converted into an triangular matrix by using the N pieces of encoded data acquired.

11. The system of claim 10, wherein the distribution device generates L N-bit sequences as candidates for selection data of the encoded data, generates a encoding candidate matrix having L rows each including as an element thereof a bit which is included in a N-bit sequence selected from the L N-bit sequences and positioned within the row in the order of bit position of the N-bit sequence, and selects N-bit sequences included in the L N-bit sequences as the selection data of the encoded data when the generated selection candidate matrix includes a matrix of N rows and N columns which can be converted into a triangular matrix by performing the predetermined matrix operation on the encoding candidate matrix.

12. A computer program comprising instructions for allowing a computer system to execute a method comprising:

dividing an original data into N pieces of partial data and generating L pieces of encoded data on the basis of the N pieces of partial data wherein N is a natural number greater than 1 and L is a natural number equal to or greater than N, each of the L pieces of encoded data including a header part and a operation result part, the header part including selection data identifying a subset of the N pieces of partial data on which a predetermined operation is performed, the operation result part being generated by performing the predetermined operation on partial data included in the subset identified by the selection data;
dividing the L pieces of encoded data into one or more transmission data groups; and
transmitting each of the one or more transmission data groups to one of one or more first communication links.

13. The computer program of claim 12, wherein the L pieces of encoded data are the same in length and the predetermined operation is an exclusive OR operation which is performed on each bit of partial data included in the subset identified by the selection data, to generate the operation result part of each of the L pieces of encoded data.

14. The computer program of claim 13, wherein the selection data comprises a N-bit sequence in which each bit thereof one-to-one corresponds, in the order of bit positions, to one of the N pieces of partial data in a predetermined order, and one or more pieces of partial data each corresponding to bit having a value of 1 in the selection data are identified as the subset of the N pieces of partial data.

15. The computer program of claim 14, wherein L pieces of selection data each included in one of the L pieces of encoded data are different from each other, and bits having the value of 1 are randomly positioned in the N-bit sequence included in each of the L pieces of selection data.

16. A computer program comprising instructions for allowing a computer system to execute a method comprising:

receiving one or more transmission data groups each transmitted from the transmission device through one of the one or more second communication links;
acquiring a plurality of pieces of encoded data from the one or more transmission data groups received to generate a selection matrix and an operation result matrix by using the plurality of pieces of encoded data acquired, the selection matrix including as a row thereof a piece of selection data included in the header part of each of the plurality of pieces of encoded data, the operation result matrix including as a row thereof a piece of data included in the operation result part of each of the plurality of pieces of encoded data; and
converting the selection matrix and the operation result matrix into an optimum selection matrix and an optimum operation result matrix, respectively, by performing a predetermined matrix operation on both rows at the same position of the selection matrix and the operation result matrix.

17. The computer program of claim 16, wherein the selection matrix has rows each including as an element thereof a bit included in the N-bit sequence in the order of bit position, the operation result matrix has rows each including as an element thereof a bit included in the operation result part of each of the plurality of encoded data, a unit matrix having N rows and N columns and a matrix having N rows are generated as the optimum selection matrix and the optimum operation result matrix, respectively, by using N pieces of encoded data acquired from the one or more transmission data groups received, and rows included in the optimum operation result matrix are connected together in the ascending order of row numbers thereof to restore the original data.

# FIG. 1

EP 1 944 898 A2

# FIG. 2

EP 1 944 898 A2

# FIG. 3

START

S11 — DETERMINE THE NUMBER OF COLUMNS N AND THE NUMBER OF ROWS L

S12 — GENERATE ENCODING CANDIDATE MATRIX

S13 — $k = 1$

S14 — GENERATE PARTIAL ENCODING CANDIDATE MATRIX

S15 — DECODING DETERMINATION PROCESS

S16 — ALL COMBINATIONS TAKEN OUT ?    NO

YES

S20 — $k = k + 1$

S17 — $k > L - N$ ?    NO

YES

S18 — STORE ENCODING MATRIX CANDIDATE WITH HIGHEST DECODING EFFICIENCY

S19 — PROCESS REPEATED PREDETERMINED NUMBER OF TIMES ?    NO

YES

END

**FIG. 4**

$$\begin{bmatrix}
0 & 1 & 0 & 1 & 0 & 0 & 1 & 1 & 0 & 0 & 1 & 0 & 1 & 1 \\
1 & 0 & 1 & 0 & 1 & 0 & 1 & 0 & 0 & 1 & 1 & 0 & 1 & 1 \\
0 & 1 & 1 & 1 & 0 & 1 & 0 & 1 & 0 & 1 & 1 & 0 & 1 & 0 \\
1 & 1 & 0 & 0 & 1 & 0 & 1 & 1 & 0 & 0 & 1 & 1 & 1 & 1 \\
0 & 1 & 1 & 1 & 0 & 1 & 1 & 1 & 1 & 0 & 0 & 0 & 0 & 0 \\
0 & 0 & 1 & 0 & 1 & 1 & 0 & 1 & 1 & 0 & 1 & 1 & 1 & 0 \\
1 & 1 & 1 & 1 & 1 & 1 & 0 & 0 & 0 & 0 & 1 & 1 & 0 & 0 \\
1 & 0 & 0 & 0 & 1 & 1 & 1 & 0 & 0 & 0 & 1 & 1 & 0 & 1
\end{bmatrix}$$

EP 1 944 898 A2

# FIG. 5

```
                    ( START )
                        │
                        ▼
S31 ┌──────────────────────────────────┐
    │   COLLECT TRANSMISSION DEVICE     │
    │           INFORMATION             │
    └──────────────────────────────────┘
                        │
                        ▼
S32 ┌──────────────────────────────────┐
    │   DETERMINE DISTRIBUTION SIZE     │
    │             RATIOS                │
    └──────────────────────────────────┘
                        │
                        ▼
S33                  ╱─────────╲         YES
          ╱──────────  S > S₀ ?  ──────────┐
                     ╲─────────╱           │
                        │                  ▼
                        │ NO   S34 ┌──────────────────────────────┐
                        │          │  ENCODING MATRIX GENERATION  │
                        │          │          PROCESS             │
                        │          └──────────────────────────────┘
                        │◄─────────────────┘
                        ▼
S35 ┌──────────────────────────────────┐
    │        ENCODING PROCESS           │
    └──────────────────────────────────┘
                        │
                        ▼
S36 ┌──────────────────────────────────┐
    │      TRANSMIT ENCODED DATA        │
    └──────────────────────────────────┘
                        │
                        ▼
                    (  END  )
```

EP 1 944 898 A2

# FIG. 6

START

S41 — DIVIDE ORIGINAL DATA INTO N PIECES OF PARTIAL DATA

S42 — N-TH PARTIAL DATA SHORTER THAN THE OTHER DATA ?

YES

S43 — FILL THE SHORTFALL OF N-TH PARTIAL DATA WITH DUMMY DATA

NO

S44 — FORM HEADER PART BY ACQUIRING A ROW FROM ENCODING MATRIX

S45 — FORM OPERATION RESULT PART

S46 — L PIECES OF SELECTION DATA ACQUIRED ?

NO

YES

END

ENCODING MATRIX A

**FIG. 7**

S44

$$\begin{bmatrix} 1 & 0 & 1 & 0 \\ 0 & 1 & 1 & 0 \\ & & \vdots & \end{bmatrix}$$

ORIGINAL DATA

| D |
|---|

PARTIAL DATA

| $D_1$ | $D_2$ | $D_3$ | $D_4$ |
|-------|-------|-------|-------|

SELECTION DATA

| 1 | 0 | 1 | 0 |
|---|---|---|---|

$D_1$

$\oplus$

$D_3$

S45

HEADER PART

OPERATION RESULT PART

ENCODED DATA

| 1 | 0 | 1 | 0 | |
|---|---|---|---|---|

| 0 | 1 | 1 | 0 | |
|---|---|---|---|---|

$\vdots$

# FIG. 8

START

S51 RECEIVE ENCODED DATA

S52 $i = 1$

S52-1 $i \leqq N$ ?

NO → (to S57 path)

YES

S53 $i$-TH BIT = 1 ? — NO → S55-1 $i = i + 1$

YES

S54 $i$-TH STACK DATA EXISTS ? — YES → S55 XOR OPERATION

NO

S56 PUSH ENCODED DATA ON STACK

S57 N OR MORE PIECES OF STACK DATA ? — NO →

YES

S58 TRIANGULAR MATRIX ? — NO →

YES

S59 PERFORM MATRIX OPERATION ON HEADER PART

S60 PERFORM MATRIX OPERATION ON OPERATION RESULT PART

END

# FIG. 9

S56

HEADER PART | OPERATION RESULT PART

| 1 | 0 | 1 | 0 | |
| 0 | 1 | 1 | 0 | |
| 1 | 0 | 0 | 1 | |
| 0 | 1 | 1 | 1 | |

S58

| 1 | 0 | 1 | 0 | |
| 0 | 1 | 1 | 0 | |
| 0 | 0 | 1 | 1 | |
| 0 | 0 | 0 | 1 | |

S59     S60

| 1 | 0 | 0 | 0 | $D_1$ |
| 0 | 1 | 0 | 0 | $D_2$ |
| 0 | 0 | 1 | 0 | $D_3$ |
| 0 | 0 | 0 | 1 | $D_4$ |

EP 1 944 898 A2

FIG. 10

# FIG. 11

EP 1 944 898 A2

**REFERENCES CITED IN THE DESCRIPTION**

**Patent documents cited in the description**

- JP 5235979 A

- JP 2005223683 A